# EUROPÄISCHE PATENTSCHRIFT

(11) **EP 2 844 778 B1**
(45) Veröffentlichungstag und Bekanntmachung des Hinweises auf die Patenterteilung: **19.09.2018**
(21) Anmeldenummer: 13731661.8
(22) Anmeldetag: 29.04.2013
(51) Int. Cl.: C21C 5/52, C21C 5/56

(54) **SCHROTTSCHMELZOFEN-PFANNENOFEN-SYSTEM UND VERFAHREN ZUM BETRIEB DIESES SYSTEMS**
SCRAP MELTING FURNACE-LADLE FURNACE SYSTEM AND METHOD FOR OPERATION OF THE SYSTEM
SYSTÈME FOUR DE FUSION DE FERRAILLES-FOUR À POCHE, ET PROCÉDÉ D'UTILISATION DE CE SYSTÈME

(30) Priorität: 30.04.2012 DE 102012009218; 30.04.2012 DE 102012207154; 25.03.2013 DE 102013005699
(43) Veröffentlichungstag der Anmeldung: 11.03.2015
(73) Patentinhaber: SMS group GmbH, 40237 Düsseldorf (DE)
(72) Erfinder: LÜTTENBERG, Mathias, 46509 Xanten (DE); SCHÜRING, Andreas, 45475 Mülheim (DE)
(74) Vertreter: Klüppel, Walter
(86) Internationale Anmeldenummer: PCT/DE2013/000259
(87) Internationale Veröffentlichungsnummer: WO 2013/163983

(56) Entgegenhaltungen:
- EP-A1- 0 240 485
- EP-A2- 0 548 041
- HOFMANN W ET AL: "CONTIARC - A NEW SCRAP MELTING TECHNOLOGY", STEEL TIMES, FUEL & METALLURGICAL JOURNALS LTD. LONDON, GB, Bd. 224, Nr. 3, 1. März 1996 (1996-03-01), XP000583748, ISSN: 0039-095X

## Beschreibung

Die Erfindung betrifft ein Schrottschmelzofen-Pfannenofen-System, sowie ein Verfahren zum Betrieb dieses Systems.

Für das Einschmelzen von Schrott und die anschließende Überhitzung bzw. Behandlung der Metallschmelze sind Niederschacht-Lichtbogenöfen beispielsweise aus der DE 42 36 510 C2 oder der DE 199 15 575 B4 und EP 0 240 485 A1 bekannt.

Die Erfindung strebt das Ziel an, die Kapazität eines integrierten Hüttenwerks durch den Einsatz eines Schrottschmelzofens zu erhöhen und die Energiebilanz sowie die Investitionsausgaben für ein Stahlwerk durch Reduzierung des Roheiseneinsatzes zu minimieren.

Ferner wird durch die Kombination Schrottschmelzofen, Pfannenofen und Konverter, die Blaszeit verkürzt, der Endphoshor- und Endschwefelgehalt bei Blasende verringert.

Erreicht wird dies durch die erfindungsgemäße Gestaltung eines mit Primärenergie betriebenen Schrottschmelzofens und eines mit elektrischer Energie betriebenen Pfannenofens, wobei das Einschmelzen des chargierten Schrotts nahezu ausschließlich durch Primärenergie und die anschließende Überhitzung der Schmelze durch den Lichtbogen erfolgt.

Im Einzelnen sieht hierzu der Anspruch 1 ein Schrottschmelzofen-Pfannenofen-System vor, das dadurch gekennzeichnet ist, dass im Schrottschmelzofen das Einschmelzen des Schrotts mittels zugeführter Primärenergie erfolgt und die Metallschmelze in einen Pfannenofen abgestochen wird, in dem das Überhitzen des geschmolzenen Metalls durch elektrische Energie, insbesondere einen Lichtbogen erfolgt.

Wie in Anspruch 1 definiert, handelt es sich bei dem Pfannenofen um einen Schwenkpfannenofen, der zwei Behandlungsstände besitzt.

Nach einer weiteren Ausbildung ist der Hub der Graphitelektroden, die für den Pfannenofen vorgesehen sind, ausreichend, um das in die Pfanne gelangte erschmolzene Metall praktisch vom Pfannenboden beginnend elektrisch zu heizen.

Beim Betrieb des Schrottschmelzofen-Pfannenofen-Systems, erfolgt das Einschmelzen des Schrotts mittels Primärenergie im Schrottschmelzofen, dann wird die Schrottschmelze in den Pfannenofen überführt und anschließend dort mittels elektrischer Energie, insbesondere einen Lichtbogen, überhitzt. Anschließen kann sich optional ein Fertiglegieren.

Nach einer weiteren Ausgestaltung des Verfahrens kann vor der Zugabe der Schrottschmelze in den Pfannenofen in diesen eine Roheisenschmelze aufgegeben werden, wobei während des Überhitzens durch den in der Roheisenschmelze gelösten Kohlenstoff eine Reduzierung der Oxide in der zugeführten Schrottschmelze erfolgt.

Die Überführung der Schrottschmeize in den Pfannenofen kann kontinuierlich oder chargenweise erfolgen.

Weiterhin kann die Schmelze aus dem Pfannenofen einem Konverter zugeführt werden, so dass dort die Fertigstellung erfolgt.

Beim Betrieb des erfindungsgemäßen System, mit einem kontinuierlich betriebenen Schachtofen wird das erschmolzene Metall durch eine kippbare Abstichrinne in den jeweils betriebenen Behandlungstand des Pfannenofens geleitet, wo das Metall überhitzt wird.

Dabei können ggf. noch notwendige metallurgische Arbeiten in der Pfanne ausgeführt werden.

Entscheidend ist, dass der größere Teil des Schmelzprozesses mit Primärenergie durchgeführt wird.

Der Einsatz der mit erheblichen Verlusten (Transformation- & Transport-Verluste) produzierten elektrischen Energie wird minimiert und nur noch für den Prozess des Überhitzens des Metalls eingesetzt. Durch diese Kombination dieser beiden Technologien gelingt es, energiesparend und umweltschonend flüssiges Metall zu erzeugen.

Sowohl das Einschmelzen mit der Primärenergie wie auch das Überhitzen mit dem Lichtbogen finden nacheinander bzw. zeitgleich statt.

Das einzuschmelzende Metall (Schrott, DRI, HBI usw.) wird durch Primärenergie-Brenner eingeschmolzen und das verflüssigte Metall wird aus dem Schrottschmelzofen kontinuierlich oder chargenweise in den Pfannenofen überführt, wo die Überhitzung mittels elektrischer Energie stattfindet. Die Prozessgase der Brenner strömen durch die Schüttgutsäule und geben hierbei einen Großteil ihrer Energie an das noch nicht geschmolzene Metall ab. Der Wirkungsgrad wird hierdurch noch weiter gesteigert.

Der Einsatz von Primärenergiebrennern in dem verkapselt ausgeführten Ofengefäß und das Schrott Changier System führen zu einer Verringerung der zu reinigenden Abgase. Dabei kommt ein spezielles Verfahren zur Online-Abgasanalysemessung zum Einsatz, welches die Steuerung der Brenner regelt und so die Verschlackung des Eisens minimiert. Dabei wird jeder Brenner entweder in Gruppen oder einzeln angesteuert.

Die zu installierende elektrische Leistung in dem erfindungsgemäßen System ist deutlich geringer als die in einem vergleichbaren EAF gleicher Produktivität.
Beim Betrieb der elektrischen Heizung gibt es nur geringe Rückwirkungen auf das elektrische Netz, da die Heizung nur auf dem flachen Bad betrieben wird. Da zum Überhitzen mit Hilfe der Lichtbögen annähernd die gleiche Zeit zur Verfügung steht, wie die Zeit, die für das Erschmelzen des Schrottes notwendig ist, kann die elektrische Anschluss Leistung sehr gering gewählt werden. Dies führt zur Reduzierung der Investitionskosten. Aufgrund der geringen Anschlussleistung ist auch der Verschleiß des FF Materials entsprechend gering.

Die Erfindung soll nachfolgend mit Bezug auf die Zeichnung beschrieben werden. Dabei zeigt:

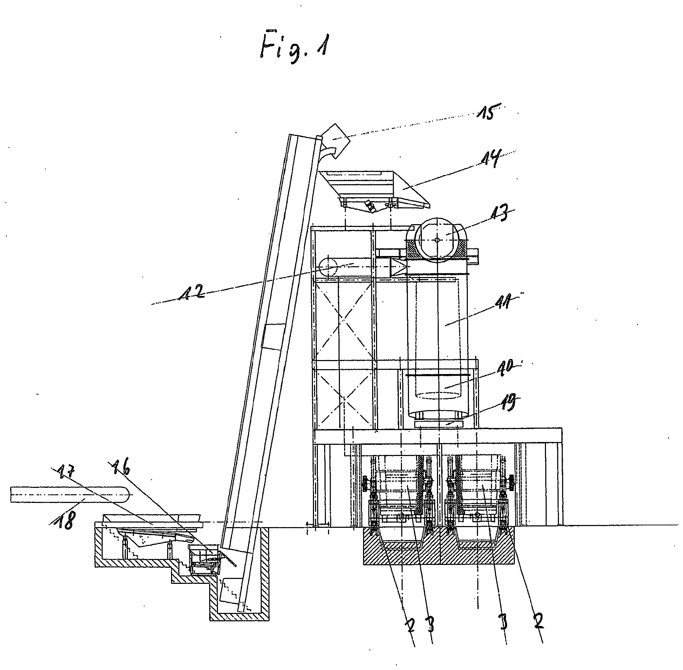

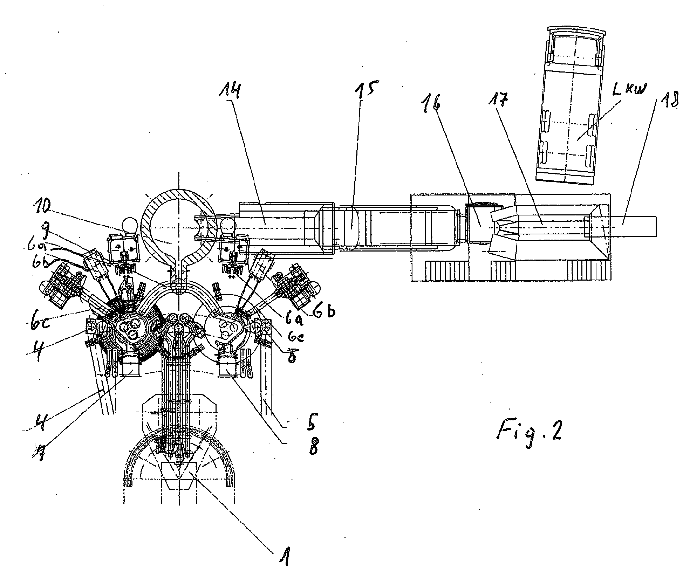

Fig. 1 und 2 schematische Darstellungen eines Schrottschmeizofens mit nachgeordnetem Schwenk-Pfannenofen in Seitenansicht und Aufsicht

### Im Einzelnen sind bezeichnet mit:

1. Schwenkpfannenofen
2. Pfannenwagen
3. Pfanne
4. Beschickungssystem 1
5. Beschickungssystem 2
6. Nebeneinrichtungen LF:
   6a T & P Lanze & O2 Lanze
   6b Drahteinspulsystem
   6c Ar.- Not Lanze
7. LF Absaugleitung 1
8. LF Absaugleitung 2
9. Abstichrinne
10. Schachtuntergefäß mit Brennersystemen und Abstichöffnung
11. Schachtgefäß
12. Abgasleitung Schachtofen
13. Materialschleuse
14. Materialaufgabe Schachtofen
15. Förderwagen
16. Zwischenbehälter
17. Schrottaufgabe
18. Schrottförderband
Online-Abgasanalyse

Erfindungsgemäß sollte es sich bei dem Pfannenofen um einen Schwenkpfannenofen 1 handeln. Jeder der beiden Behandlungsstände ist mit den erforderlichen Nebeneinrichtungen T&P-Lanze 6a; Drahteinspulsystem 6b; Argon Not Lanze 6c) und einem Anschluss an die Materialwirtschaft ausgerüstet. Ggf. kann durch die Zugabe von kohlenstoffhaltigen Zuschlägen ein Teil des verschlackten Eisens zurück reduziert werden. Es ist vorstellbar, dass durch eine Sauerstofflanze bei gleichzeitiger Zugabe von Aluminium bzw. Fe Si ein chemisches Heizen erfolgen kann, hierdurch kann die Zugabe von elektrischer Energie noch weiter verringert werden.
Der Schrott wird durch eine Materialschleuse 13 in den gekapselten Schachtofen 10 eingebracht.

Unterhalb der Materialschleuse 13 befindet sich die der Anschluss der Gasreinigungsanlage im anschießenden Schacht erwärmen die Prozessgase die chargierte Schrottfüllung des Schachtes. Im Schachtuntergefäss 11 sind das Brennersystem und die Abstichöffnung angeordnet. Da der Verschleiß des FF Materials im Brennerbereich voreilend gegenüber dem restlichen Schachtofen ist, kann dieser Bereich separat gewechselt werden. Durch die Abstichrinne 9 wird das flüssige Metall in den jeweils genutzten Behandlungsstand geleitet und hier mit Hilfe der Lichtbögen des LF überhitzt.

Erreichbar ist mit dem erfindungsgemäßen System bzw. dessen Betriebsweise ein kontinuierlicher Betrieb, d. h. ein ununterbrochener Schmelz- und Überhitzungsbetrieb.

Da der Ofen kontinuierlich betrieben wird, wird auch die Schrottsäule konstant gehalten, so dass sich gleichmäßige Betriebsbedingungen für die Brenner sowie die Erwärmung und das Aufschmelzen der Schrottsäule ergeben.

Weitere Möglichkeiten sind:
- Die Überhitzungseinrichtung kann mit Gleichstrom (eine Elektrode) aber auch mit Wechselstrom (drei Elektroden) betrieben werden.
- Der LF kann als stationärer Ofen betrieben werden, mit zwei Fahrzeugen und einer Übergaberinne.

## Patentansprüche

1. Schrottschmelzofen-Pfannenofen-System.
**dadurch gekennzeichnet,**
**dass** im Schrottschmelzofen das Einschmelzen des Schrotts mittels zugeführter Primärenergie erfolgt und die Metallschmelze in einen Schwenkpfannenofen (1), der zwei Behandlungsstände besitzt, abgestochen wird, wobei der kontinuierlich betriebene Schachtofen als Schrottschmelzofen das erschmolzene Metall durch eine kippbare Abstichrinne (9) in den jeweils betriebenen Behandlungsstand des Pfannenofens leitet, in dem das Überhitzen des geschmolzenen Metalls durch elektrische Energie, insbesondere einen Lichtbogen erfolgt und der Stahl ggf. fertig legiert wird.

2. Schrottschmelzofen-Pfannenofen-System nach Anspruch 1,
**dadurch gekennzeichnet,**
**dass** der Hub der Graphitelektroden, die für den Pfannenofen vorgesehen ist, ausreichend ist, um das in die Pfanne gelangte erschmolzene Metall praktisch vom Pfannenboden beginnend elektrisch zu heizen.

3. Schrottschmeizofen-Pfannenofen-System nach einem der vorstehenden Ansprüche,
**dadurch gekennzeichnet,**
**dass** der Schachtofen mit der Materialschleuse gekapselt ausgeführt ist, um die Falschluftmengen des Schrottschmelzofens zu minimieren und Sauerstoffbrenner zum Einsatz kommen.

4. Verfahren zum Betrieb eines Schrottschmelzofen-Pfannenofen-Systems, **dadurch gekennzeichnet,**
**dass** das Einschmelzen des Schrotts mittels Primärenergie mit einem kontinuierlich betriebenen Schachtofen erfolgt und das erschmolzene Metall durch eine kippbare Abstichrinne in den jeweils betriebenen Behandlungsstand eines Pfannenofens geleitet wird, wo das Metall anschließend dort mittels elektrischer Energie, insbesondere einen Lichtbogen, überhitzt wird, dem sich optional ein Fertiglegieren anschließt.

5. Verfahren nach Anspruch 4,
**dadurch gekennzeichnet,**
**dass** vor der Zugabe der Schrottschmeize in den Pfannenofen in diesen eine Roheisenschmelze aufgegeben wird und dass während des Überhitzens durch den in der Roheisenschmelze gelösten Kohlenstoff eine Reduzierung der Oxide in der zugeführten Schrottschmelze erfolgt.

6. Verfahren nach einem der vorstehenden Verfahrensansprüche,
**dadurch gekennzeichnet,**
**dass** die Überführung der Schrottschmelze in den Pfannenofen kontinuierlich oder chargenweise erfolgt.

7. Verfahren nach einem der vorstehenden Verfahrensansprüche,
**dadurch gekennzeichnet,**
**dass** die Schmelze aus dem Pfannenofen einem Konverter zugeführt wird.

8. Verfahren nach einem der vorstehenden Verfahrensansprüche,
**dadurch gekennzeichnet,**
**dass** die Blaszeit im Konverter verringert wird und so die Produktivität erhöht wird.

9. Verfahren nach einem der vorstehenden Verfahrensansprüche,
**dadurch gekennzeichnet,**
**dass** die Endphosphorgehalte in der Schmelze bei Blasende abgesenkt werden.

10. Verfahren nach einem der vorstehenden Verfahrensansprüche,
**dadurch gekennzeichnet,**
**dass** die Endschwefelgehalte der Schmelze bei Blasende abgesenkt werden.

11. Verfahren nach einem der vorstehenden Verfahrensansprüche,
**dadurch gekennzeichnet,**
**dass** durch die Online-Abgasanalysemessung und der direkten Ansteuerung der Brenner, in Gruppen oder einzeln, die Verschlackung des Eisens minimiert.

## Claims

1. Scrap melting furnace / ladle furnace system, **characterised in that** melting of the scrap by means of supplied primary energy is carried out in the scrap melting furnace and the metal melt is tapped off into a pivot ladle furnace which has two treatment stations, wherein the continuously operated shaft furnace as scrap melting furnace conducts the molten metal through a tippable tapping channel (9) into the respectively operating treatment station of the ladle furnace, in which superheating of the molten metal is carried out by electrical energy, particularly an arc, and the steel optionally is alloyed to finished state.

2. Scrap melting furnace / ladle furnace system according to claim 1, **characterised in that** the stroke of the graphite electrode provided for the ladle furnace is sufficient to electrically heat the metal, which has become molten in the ladle, starting virtually from the ladle base.

3. Scrap melting furnace / ladle furnace system according to one of the preceding claims, **characterised in that** the shaft furnace with the material lock is of encapsulated construction so as to minimise spurious air quantities of the scrap metal furnace and make use of oxygen burners.

4. Method of operating a scrap melting furnace / ladle furnace system, **characterised in that** melting of the scrap is carried out by means of primary energy with a continuously operated shaft furnace and the molten metal is conducted by a tippable tapping channel into the respectively operating treatment station of a ladle furnace, where the metal is subsequently superheated by means of electrical energy, particularly an arc, subsequent to which alloying to final state optionally takes place.

5. Method according to claim 4, **characterised in** prior to feed of the scrap melt into the arc furnace a pig iron melt is added thereto and that during superheating by the carbon released in the pig iron melt a reduction of oxides in the supplied molten scrap takes place.

6. Method according to one of the preceding method claims, **characterised in that** transfer of the molten scrap to the ladle furnace is carried out continuously or in batches.

7. Method according to any one of the preceding method claims, **characterised in that** the melt is fed from the ladle furnace to a converter.

8. Method according to any one of the preceding method claims, **characterised in that** the blowing time in the converter is reduced and thus productivity is increased.

9. Method according to any one of the preceding method claims, **characterised in that** the final phosphorous contents in the melt are lowered at the end of blowing.

10. Method according to any one of the preceding method claims, **characterised in that** the final sulphur contents of the melt are lowered at the end of blowing.

11. Method according to any one of the preceding method claims, **characterised in that** slag contamination of the iron is minimised by on-line waste gas analysis measurement and direct control of the burners in groups or individually.

## Revendications

1. Système de four de fusion de grenaille avec four-poche, **caractérisé en ce que**, dans le four de fusion de grenaille a lieu le traitement par fusion de la grenaille au moyen d'énergie primaire alimentée, et le métal en fusion est tronçonné dans un four-poche pivotant (1) qui possède deux postes de traitement ; dans lequel le four vertical exploité en continu faisant office de four de fusion de grenaille guide le métal fondu, via une goulotte de coulée (9) apte à basculer, dans le poste de traitement respectivement exploité de la poche, dans lequel la surchauffe du métal en fusion a lieu en recourant à de l'énergie électrique, en particulier à un arc électrique et l'acier est soumis le cas échéant à une finition par alliage.

2. Système de four de fusion de grenaille avec four-poche selon la revendication 1, **caractérisé en ce que** la course des électrodes en graphite, qui sont prévues pour le four-poche, est suffisante pour chauffer pratiquement par voie électrique le métal en fusion qui aboutit dans la poche, en commençant par la base de la poche.

3. Système de four de fusion de grenaille avec four-poche selon l'une quelconque des revendications précédentes, **caractérisé en ce que** le four vertical est réalisé de manière encapsulée avec le clapet du système de chargement afin de minimiser les quantités d'air parasite du four de fusion de grenaille et pour mettre en oeuvre des chalumeaux oxhydriques.

4. Procédé pour l'exploitation d'un système de four de fusion de grenaille avec four-poche **caractérisé en ce que** le traitement par fusion de la grenaille a lieu au moyen d'énergie primaire avec un four vertical exploité en continu et le métal en fusion est guidé, via une goulotte de coulée apte à basculer, dans le poste de traitement respectivement exploité d'un four-poche, dans lequel le métal est soumis, directement après, à une surchauffe en recourant à de l'énergie électrique, en particulier à un arc électrique, surchauffe à laquelle fait directement suite de manière facultative un alliage de finition.

5. Procédé selon la revendication 4, **caractérisé en ce que**, avant l'addition de la masse fondue de grenaille dans le four-poche, on se défait dans ce dernier d'une masse fondue de fonte brute, et **en ce que**, au cours de la surchauffe, via le carbone dissous dans la masse fondue de fonte brute, on obtient une réduction des oxydes dans la masse fondue de grenaille alimentée.

6. Procédé selon l'une des revendications précédentes de procédé, **caractérisé en ce que** le transfert de la masse fondue de grenaille dans le four-poche a lieu en continu ou en discontinu.

7. Procédé selon l'une des revendications précédentes de procédé, **caractérisé en ce que** la masse fondue est acheminée depuis le four-poche jusqu'à un convertisseur.

8. Procédé selon l'une des revendications précédentes de procédé, **caractérisé en ce qu'**on réduit la durée d'insufflation dans le convertisseur pour ainsi augmenter la productivité.

9. Procédé selon l'une des revendications précédentes de procédé, **caractérisé en ce que** la teneur finale de la masse fondue en phosphore est abaissée à la fin de l'insufflation.

10. Procédé selon l'une des revendications précédentes de procédé, **caractérisé en ce que** la teneur finale de la masse fondue en soufre est abaissée à la fin de l'insufflation.

11. Procédé selon l'une des revendications précédentes de procédé, **caractérisé en ce que**, via la mesure par analyse des gaz d'échappement en ligne et via la commande directe des brûleurs, par groupes ou de manière individuelle, on minimise la scorification du fer.
